# EUROPEAN PATENT APPLICATION

(11) **EP 3 358 818 A1**
(43) Date of publication of application: **08.08.2018**
(21) Application number: 17154550.2
(22) Date of filing: 03.02.2017
(51) Int. Cl.: H04N 5/225, G03B 9/02

(54) **CAMERA MODULE FOR A MOTOR VEHICLE AND STEREOSCOPIC ARRANGEMENT OF AT LEAST TWO CAMERA MODULES**

(71) Applicant: Autoliv Development AB, 447 83 Vårgårda (SE)
(72) Inventor: Knutsson, Per, 58331 Linköping (SE); Emilsson, Börje, 42468 Angered (SE)
(74) Representative: Müller Verweyen

(57) **Abstract**

The present invention relates to camera module for a motor vehicle, comprising a lens objective (1) with an aperture stop (15), and a lens barrel (2) holding said lens objective (1), wherein the aperture stop (15) comprises an opening (18) having different widths in at least two different directions.

## Description

The invention relates to a camera module comprising the features of the preamble of claim 1 and a stereoscopic arrangement of at least two camera modules comprising the features of the preamble of claim 11.

A camera module comprising the features of the preamble of claim 1 is known for example from the EP 2 942 938 A1.

Automotive camera modules are exposed to temperatures varying over a large range, and are required to have excellent imaging performance over the whole temperature range occurring in practice. In many fixed-focus automotive camera modules, a major challenge is to retain the focus over the temperature envelope T. For low f/# lenses (the abbreviation f/# represents the f-number), the distance between the image and the sensor must be controlled at a scale of micrometers. However, the optomechanical structure expands with increasing temperature, and therefore the distance between the lens objective and the image sensor increases along the optical axis with increasing temperature, with the result that the sensor moves away from the best image plane of the lens objective and the image quality deteriorates.

Furthermore, there is a need to achieve high levels of image sharpness with optics that is highly sensitive to low light conditions. In general it is known from ancient consumer cameras that the sharpness depends on the f-number. In optics, the f-number (sometimes called focal ratio, f-ratio, f-stop, or relative aperture stop) of an optical system is the ratio of the lens's focal length to the diameter of the entrance pupil. To achieve pictures with a high sharpness it is preferred to use an aperture stop with a high f-number, while the sharpness decreases with lowering the f-number or with widening the opening of the aperture stop. Therefore, it is preferred to realize the f-number as high as possible to optimize the sharpness of the pictures. On the other hand, the f-number needs to be chosen also with respect to the light conditions as a minimum amount of light is needed, so under low light conditions a low f-number needs to be realized. Therefore, the dimensioning of the f-number of the camera module when designing the camera needs to be performed under the contradiction of enabling good pictures under low light conditions as well as achieving a high sharpness in general. This relation is applicable in general when the lens is aberration limited, which is usually the case. If the lens is diffraction limited the above mentioned relation is not applicable.

The dimensioning of the f-number of a system with fixed aperture of the aperture stop is an essential problem in the design of the camera module because the f-number is designed only once for a camera with fixed aperture stop and may not be varied after the assembly of the camera module. So the design of the f-number is always a compromise between both requirements, and none of the criteria may be fulfilled optimally.

In view of the background it is the object of the invention to provide a camera module and a stereoscopic arrangement of at least two camera modules with an improved design regarding the aforementioned problem.

The object is solved by a camera module comprising the features of claim 1 and by a stereoscopic arrangement according to claim 11. Further preferred embodiments of the invention are contained in the sub claims, the figures and the related description.

According to the invention it is suggested that the aperture stop comprises an opening having different width in at least two different directions. Because of the suggested solution the aperture stop comprises different f-numbers in the different directions. The f-number is in the direction of the smaller width greater than in the direction of the greater width. The aperture stop and the camera module can be designed therefore in predetermined direction with a higher f-number and in another direction with a lower f-number, so it is possible to realize in the direction of the higher f-number a higher sharpness while the lower f-number in the other direction enables qualitative good images even under low light conditions. The direction of the higher f-number and the lower f-number may be designed individually according to the position and orientation of the camera and especially of the lens objective and the related light conditions.

Furthermore, it is suggested that the opening is designed as an ellipse, so that the width changes in circumferential direction continuously from the greater width to the smaller width. Therefore, also the sharpness of the image changes continuously in circumferential direction which results in a better appearance of the images.

In various tests it has been shown that a high quality of images regarding sharpness as well as regarding the low light condition can be achieved when the ellipse comprises a main axis having a greater width and a minor axis having a smaller width with a relation of 1,5 to 2,0.

Furthermore, it is suggested that the aperture stop is oriented with the smaller width of the opening in horizontal direction and with the greater width of the opening in vertical direction when mounted in the predetermined mounting position of the camera module. The advantage of the suggested solution is based on the fact that the field of view of automotive cameras is in general much wider in the horizontal direction than in the vertical direction. This kind of asymmetrical distribution of the field of view implies that it is challenging to reach higher sharpness in the horizontal periphery of the image, which is achieved by the suggested solution with the higher f-number of the aperture stop in horizontal direction. As the aperture stop is provided in the vertical direction with a lower f-number because of the greater width it is also possible to create qualitative good images under low light conditions.

It is further preferred that the lens barrel comprises a ring shaped slit in which the aperture stop is arranged. The ring shaped slit enables an easy adjustment of the aperture stop with the different widths versus the lens barrel in the camera module in a predetermined position, in which the aperture stop is finally fixed after the adjustment. The ring shaped slit is preferably oriented coaxially to the optical axis of the lens objective fixed in the lens barrel, so that the opening is oriented perpendicular to the optical axis.

The lens objective may comprise preferably at least two single lenses fixed in the lens barrel, which are arranged coaxially to a common axis in a stack in the lens barrel. The common axis is in this case identical with the optical axis.

In this case the aperture stop is arranged between two lenses, wherein the lenses are fixed preferably in a distance to each other by the aperture stop. The aperture stop is used here as a kind of distance ring, which is fixed between the lenses.

The aperture stop is realized preferably by a metal ring, a plastic ring or by punching a black film, which may be inserted into the lens barrel during assembly of the lens objective.

Alternatively, the aperture stop may also be realized by an opaque coating on one of the lenses.

Furthermore, a stereoscopic arrangement of at least two camera modules is suggested, in which at least a first camera module is mounted on the vehicle with the aperture stop oriented with the smaller width of the opening orthogonal to the forward driving direction of the vehicle and orthogonal to a vector connecting the first camera module with a second camera module arranged beside the first camera module. The suggested solution enables sharp stereoscopic images also under low light conditions.

According to another preferred embodiment it is suggested that the first and the second camera module are arranged at an identical height of the vehicle, so they are placed horizontally. The aperture stops of both camera modules are oriented with the smaller width also in horizontal direction, so that the stereo images got a very high sharpness in horizontal direction while the resolution in vertical direction is lower due to the larger width but it provides better images under low light conditions.

In the following the invention shall be illustrated on the basis of a preferred embodiment with reference to the accompanying drawings, wherein:
- Fig. 1: shows a lens objective with an aperture stop, and
- Fig. 2: an aperture stop used in the prior art with a circular opening, and
- Fig. 3: an aperture stop according to the invention with an opening having different widths in different directions.

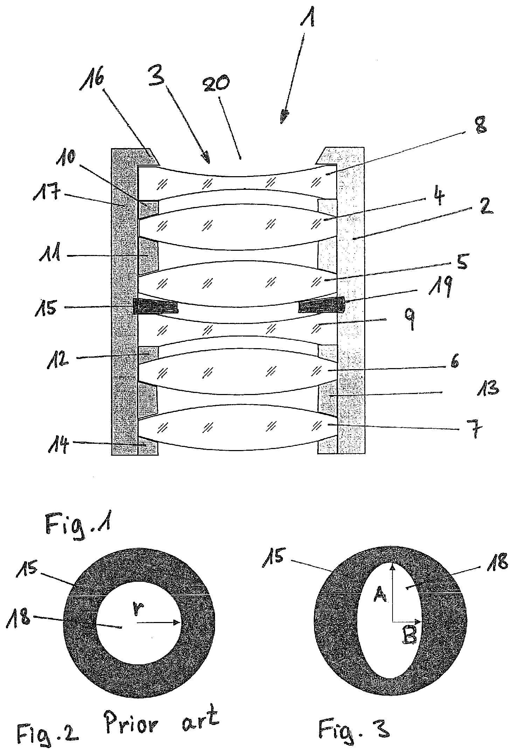

In figure 1 it is shown a lens objective 1 which is fixed in a lens barrel 2. The lens barrel 2 is connected to a lens holder which is fixed at a back plate, which is holding an image sensor in or close to an image plane of the lens objective 1 like shown in the EP 2 942 938 A1. The camera module disclosed in the EP 2 942 938 A1 is incorporated herewith to the disclosure of this application by reference and it may be assumed that the principle design of the camera module claimed in this application is so far identical to the camera module described in the EP 2 942 938 A1.

The lens barrel 2 comprises a tube 16 having at the free end a radial inwardly directed projection 16, which limits the optical entrance opening 20 of the lens barrel 2 and the lens objective 1 arranged therein. Furthermore, the projection 16 acts as an abutment for the objective lens 1 fixing the objective lens 1 in the lens barrel 2. The lens objective 1 comprises a stack 3 of several lenses 4, 5, 6, 7, 8 and 9 which are designed as convex or concave lenses depending on the optical requirements. The lenses 4, 5, 6, 7, 8 and 9 are separated in the stack 3 by several distance rings 10, 11, 12, 13 and 14 and one aperture stop 15 arranged between the third lens 5 and the fourth lens 9. The lens barrel 2 is assembled by inserting the lenses 4, 5, 6, 7, 8 and 9, the distance rings 10, 11, 12, 13 and 14 and the aperture stop 15 in an alternating and successive manner into the tube 17. In a first step, the first concave lens 8 is inserted into the tube 17. The first concave lens 8 faces towards the outside and abuts at the radial inwardly directed projection 16. In the following assembly steps, the distance ring 10, the convex lens 4 and the remaining lenses 5, 9, 6 and 7 and distance rings 11, 12, 13, 14 and the aperture stop 15 are inserted in the sequence shown in figure 1. The third lens 5 is a convex lens and the fourth lens 9 is a concave lens, wherein the fourth lens 9 got the negative surface of the third lens 5, so the aperture stop 15 is arranged in a space between both lenses 5 and 9 with a fixed distance in the direction of the optical axis. After the assembly of the lens barrel 2 and the lens objective 1, the module is mounted with a lens holder on the back plate like shown in figure 2 of the EP 2 942 938 A1. The design of the camera module is not described here further in detail and it is referred to the further description of the camera module in EP 2 942 938 A1 to shorten the description of this application.

In the figure 2 it is shown the design of the aperture stop 15 used in the prior art. The aperture stop 15 comprises an opening 18 having a circular geometry with an f-number which is identical for all directions and may not be varied.

According to the inventive solution it is suggested that the aperture stop 15 comprises an opening 18 having different width in different directions for example in a shape of an ellipse like shown in figure 3. The ellipse comprises a main axis A and a minor axis B with a relation of 1.5 to 2.0. Therefore, the f-number is in the direction of the main axis A lower than in the direction of the minor axis B. The aperture stop 15 is mounted and adjusted with an orientation of the main axis A in vertical direction and the minor axis B in horizontal direction when the camera module is mounted in the predetermined position on the vehicle.

The aperture stop 15 is arranged in a ring shaped slit 19 in the tube 17, so that the aperture stop 15 may be turned in the tube 17 around the optical axis of the lens objective 1 and the length axis of the tube 17, which are here identical.

As the f-number is in horizontal direction greater than in the vertical direction, the image comprises a good sharpness in the horizontal direction while the lower f-number in vertical direction enables qualitative good images also under low light conditions. So by designing the opening 18 with different widths it is possible to achieve an improved sharpness without disadvantages for the images under low light conditions.

The aperture stop 15 may be realized by a metal or plastic rigid ring or also by punching a film or foil. Alternatively, it is also possible to realize the aperture stop 15 by a coating of one of the lenses 8, 4, 5, 6, 7 or 9. Independent from the design and material of the aperture stop 15 it is important that the aperture stop 15 is opaque in the section in which the opening 18 is arranged.

The opening 18 shaped as an ellipse is in so far advantageous as the width changes continuously in circumferential direction, so there are no steps in the changements of the f-number. Nevertheless, the characteristic of the f-numbers in the different directions may be designed individually to fulfill the special requirements of the images and of the mounting conditions.

The suggested solution is especially reasonable for stereo cameras as the horizontal resolution is given a higher priority than the resolution in vertical direction. In stereo cameras with two camera modules arranged horizontally at an identical height at the vehicle, the resolution in horizontal direction is of higher priority for the quality and especially in order to improve accuracy of distance measure.

## Claims

1. Camera module for a motor vehicle, comprising
- a lens objective (1) with an aperture stop (15),
- a lens barrel (2) holding said lens objective (1), **characterized in that**
- the aperture stop (15) comprises an opening (18) having different widths in at least two different directions.

2. Camera module according to claim 1, **characterized in that**
- the opening (18) is designed as an ellipse.

3. Camera module according to claim 2, **characterized in that**
- the ellipse comprises a main axis (A) having a greater width and a minor axis (B) having a smaller width, wherein
- the relation of the width of the main axis (A) to the width of the minor axis (B) is 1,5 to 2,0.

4. Camera module according to one of the preceding claims, **characterized in that**
- the aperture stop (15) is oriented with the smaller width of the opening (18) in horizontal direction and with the greater width of the opening (18) in vertical direction when mounted in the predetermined mounting position of the camera module.

5. Camera module according to one of the preceding claims, **characterized in that**
- the lens barrel (2) comprises a ring shaped slit (19) in which the aperture stop (15) is arranged.

6. Camera module according to one of the preceding claims, **characterized in that**
- the lens objective (1) comprises at least two single lenses (4, 5, 6, 7, 8, 9) fixed in the lens barrel (2).

7. Camera module according to claim 6, **characterized in that**
- the aperture stop (15) is arranged between two lenses (4, 5, 6, 7, 8, 9).

8. Camera module according to claim 6 or 7, **characterized in that**
- the lenses (4, 5, 6, 7, 8, 9) are fixed in a distance to each other by the aperture stop (15).

9. Camera module according to one of the claims 6 to 8, **characterized in that**
- the aperture stop (15) is realized by a metal ring, a plastic ring or by punching a black film.

10. Camera module according to claim 6, **characterized in that**
- the aperture stop (15) is realized by an opaque coating on one of the lenses (4, 5, 6, 7, 8, 9).

11. Stereoscopic arrangement of at least two camera modules according to any of the preceding claims, **characterized in that**
- at least a first camera module is mounted on the vehicle with the aperture stop (15) oriented with the smaller width of the opening (18) orthogonal to the forward driving direction of the vehicle and orthogonal to a vector connecting the first camera module with a second camera module arranged beside the first camera module.

12. Stereoscopic arrangement according to claim 11, **characterized in that**,
- the first and the second camera module are arranged at an identical height of the vehicle.
